# EUROPÄISCHE PATENTSCHRIFT

(11) **EP 0 485 813 B1**
(45) Veröffentlichungstag und Bekanntmachung des Hinweises auf die Patenterteilung: **26.06.1996**
(21) Anmeldenummer: 91118606.2
(22) Anmeldetag: 31.10.1991
(51) Int. Cl.: H04B 10/16

(54) **Optisches Nachrichtenübertragungssystem mit einem faseroptischen Verstärker**
Optical telecommunications system with optic fiber amplifier
Système de télécommunications optique avec amplificateur en fibre optique

(30) Priorität: 15.11.1990 DE 4036327
(43) Veröffentlichungstag der Anmeldung: 20.05.1992
(73) Patentinhaber: Alcatel SEL Aktiengesellschaft, D-70435 Stuttgart (DE)
(72) Erfinder: Heidemann, Rolf, Dr., W-7146 Tamm (DE)
(74) Vertreter: Kugler, Hermann, Dipl.-Phys.

(56) Entgegenhaltungen:
- EP-A- 0 415 438
- EP-A- 0 440 276
- EP-A- 0 449 475
- PATENT ABSTRACTS OF JAPAN vol. 10, no. 247 (P-490)(2303) 26. August 1986;& JP-A-61075326

## Beschreibung

Die Erfindung betrifft ein System zum Übertragen eines optischen Signals, wie es im Oberbegriff des Patentanspruchs 1 beschrieben ist.

Ein solches Übertragungssystem ist bekannt aus "ECOC '89", Fifteenth European Conference on Optical Communication, September 10-14, 1989, Gothenburg, Sweden, Proceedings, Vol. 1, Regular Papers TuA 5-7, Seiten 86 bis 89.

Dort sind zwei verschiedene Systemkonfigurationen erläutert. Bei der ersten (co-propagating configuration) wird das Licht der Pumplicht-Quelle über einen Koppler in das Er³⁺-dotierte Faserstück eingekoppelt, der, bezogen auf die Übertragungsrichtung des zu verstärkenden optischen Signals, vor dem verstärkenden Faserstück angeordnet ist. Bei der zweiten Systemkonfiguration (counter-propagating configuration) befindet sich der das Pumplicht in das verstärkende Faserstück einkoppelnde Koppler, bezogen auf die Übertragungsrichtung des zu verstärkenden Signals, hinter dem Faserstück.

Bisweilen ist es bei Übertragungssystemen erwünscht oder notwendig, zusätzlich zu dem ersten optischen Signal ein zweites Signal, z.B. aus einem Dienstkanal, von dem Ort, an dem sich der faseroptische Verstärker befindet, in der einen oder anderen Richtung zu übertragen.

Ein solches Übertragungssystem ist bekannt aus EP-A-0 440 276, veröffentlicht am 07.08.91.

Es ist die Aufgabe der Erfindung, ein hierzu geeignetes System anzugeben.

Die Aufgabe wird wie im Patentanspruch 1 angegeben gelöst. Weiterbildungen ergeben sich aus den Unteransprüchen.

Die Erfindung wird nun anhand der Zeichnungen durch Beispiele näher erläutert. Es zeigen:
- Fig. 1: ein erstes Ausführungsbeispiel zum Übertragen des zusätzlichen Signals in der entgegengesetzten Richtung zum ersten optischen Signal, und
- Fig. 2: ein zweites Ausführungsbeispiel zum Übertragen des zusätzlichen Signals in mit dem ersten optischen Signal gleicher Übertragungsrichtung.

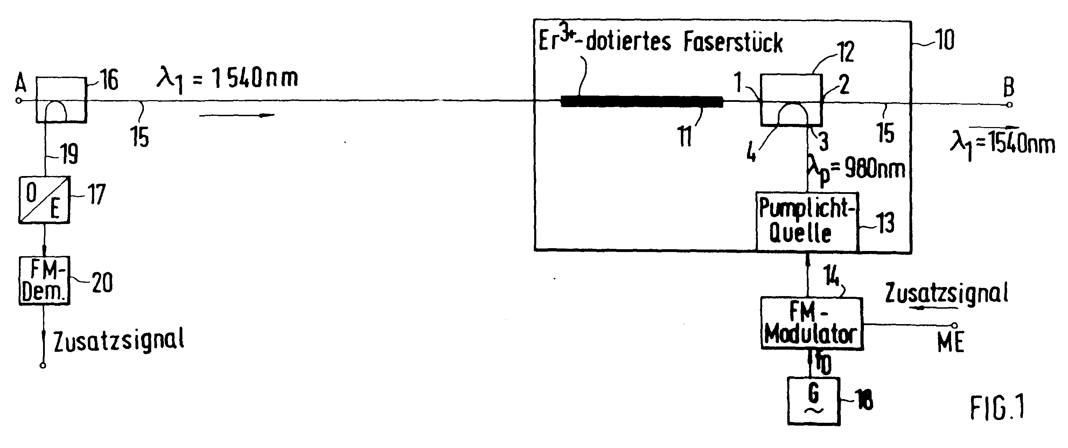

Die Fig. 1 zeigt ein Übertragungssystem, mit dem ein optisches Signal von einem Punkt A zu einem Punkt B zu übertragen ist. Am Endpunkt A befindet sich ein nicht gezeigter optischer Sender und am Endpunkt B ein nicht gezeigter optischer Empfänger. Das von A nach B zu übertragende optische Signal hat eine Wellenlänge λ₁ von 1540 nm. Als Übertragungsstrecke dient ein Monomode-Lichtwellenleiter 15, der bei der Wellenlänge λ₁ ausreichend gute Übertragungseigenschaften hat.

Wie das eingangs genannte bekannte System enthält auch das System nach Fig. 1 einen faseroptischen Verstärker 10, der besteht aus einem Er³⁺-dotierten Faserstück 11, einem wellenlängenselektiven faseroptischen Koppler 12 und einer Pumplicht-Quelle 13. Der Koppler 12 hat vier Anschlüsse 1 bis 4. Sein Anschluß 1 ist mit dem Er³⁺-dotierten Faserstück 11, sein Anschluß 2 über den Lichtwellenleiter 15 mit dem Endpunkt B der optischen Übertragungsstrecke verbunden, und sein Anschluß 3 ist über ein Lichtwellenleiterstück mit der Pumplicht-Quelle 13 verbunden. Als Koppler 12 ist ein solcher wellenlängenselektiver faseroptischer Koppler zu verwenden, der die Eigenschaft hat, das von A nach B zu übertragende optische Signal mit der Wellenlänge λ₁ möglichst ungedämpft am Kopplerausgang 2 auszugeben und das von der Pumplicht-Quelle 13 erzeugte Pumplicht mit der Wellenlänge λₚ von 980 nm vom Kopplereingang 3 möglichst verlustfrei am Koppleranschluß 1 in Richtung zum dotierten Faserstück 11 auszugeben. Der Koppleranschluß 4 ist unbenutzt.

Um vom Ort der Pumplicht-Quelle ein zusätzliches Nachrichtensignal, z.B. ein Nachrichtensignal eines Dienstkanals oder Signale zur Überwachung des optischen Verstärkers selbst, zum Endpunkt A der optischen Übertragungsstrecke übertragen zu können, ist erfindungsgemäß bei der Pumplicht-Quelle 13 eine Modulationseinrichtung 14 vorhanden, die das von der Pumplicht-Quelle 13 erzeugte Pumplicht mit einem Modulationssignal moduliert, das das zusätzliche Nachrichtensignal enthält. Die Modulationseinrichtung 14 ist vorzugsweise ein Frequenzmodulator, der ein an seinem Modulationseingang ME anliegendes analoges oder digitales Zusatzsignal, z.B. in der Basisband-Lage, einer von einem Generator 18 erzeugten Trägerschwingung mit einer Trägerfrequenz f₀ aufmoduliert, so daß dadurch am Ausgang des Frequenzmodulators 14 das Modulationssignal für die Pumplicht-Quelle, d.h. die mit dem Zusatzsignal frequenzmodulierte Trägerschwingung, erscheint. Die Pumplicht-Quelle 13 ist so zu betrachten, daß sie die notwendigen Steuerschaltungen für ihren Laser, also den sogenannten Lasertreiber, und eine Steuerschaltung für die Gleich-Vorspannung des Lasers, enthält. In den Lasertreiber der Pumplicht-Quelle 13 wird das Modulationssignal eingespeist und moduliert dadurch die Intensität des von der Pumplicht-Quelle 13 erzeugten Lichts.

Selbstverständlich ist es auch möglich, daß die Pumplicht-Quelle zunächst unmoduliertes Licht erzeugt und das Modulationssignal dazu verwendet wird, das Pumplicht in einem der Pumplicht-Quelle nachgeschalteten Modulator zu modulieren. Auch in diesem Falle wird das von der Pumplicht-Quelle erzeugte Pumplicht moduliert.

Im Normalbetrieb ist die Intensität des Pumplichts so hoch, daß aus dem vom Koppler 12 entfernten Ende des Faserstücks 11 ein beträchtlicher Anteil, der im Faserstück 11 nicht absorbiert wird, in den Lichtwellenleiter 15 gelangt und von dort in Richtung zum Endpunkt A weiter übertragen wird. Das Zusatzsignal läßt sich auf diese Weise in Richtung zum Endpunkt A bis zu der Stelle übertragen, an der das Pumplicht noch mit einem zur Signalübertragung ausreichenden Pegel detektiert werden kann. An dieser Stelle ist in den Lichtwellenleiter ein faseroptischer wellenlängenselektiver Koppler 16 eingefügt, der das Pumplicht aus dem Lichtwellenleiter 15 auskoppelt. Mit dem Ausgang des Kopplers 16 ist über ein Lichtwellenleiterstück 19 ein optischer Empfänger 17 verbunden, an dessen Ausgang das dem Pumplicht aufgeprägte elektrische Modulationssignal erscheint, das schließlich in einem FM-Demodulator 20 demoduliert wird, so daß an seinem Ausgang das Zusatzsignal erscheint.

Die Erfindung nützt also den unvermeidbar aus dem Faserstück 11 austretenden Anteil des Pumplichts, der nur mit Filtern unterdrückbar wäre, zur Übertragung eines Zusatzsignals vom Ort der Pumplicht-Quelle über das Faserstück 11 zum entfernten Endpunkt der optischen Übertragungsstrecke aus.

Damit die Modulation des Pumplichts nicht die Verstärkung moduliert, die das vom Endpunkt A zum Endpunkt B zu übertragende optische Signal beim Durchgang durch das verstärkende Faserstück 11 erfährt, wird die Frequenz f₀ des im FM-Modulator 14 verwendeten Trägers in geeigneter Weise gewählt. Geeignet ist eine Frequenz f₀, die sehr viel größer ist als der Kehrwert der Lebensdauer der durch das Pumplicht anregbaren Energiezustände des Er³⁺-Materials des Faserstücks 11, also eine Frequenz von oberhalb 1MHz.

Ein Anwendungsfall für das in Fig. 1 gezeigte neue Übertragungssystem ist beispielsweise dann gegeben, wenn das optische Übertragungssystem ein Kabelfernseh-Verteil-System ist, bei dem ein elektrisches Frequenz-Multiplexsignal mit einer Bandbreite von 450 MHz über die optische Übertragungsstrecke zu übertragen ist und in einer Vorfeldeinrichtung, die das bis zu ihr übertragene optische Signal auf mehrere zu einzelnen Teilnehmern führende Lichtwellenleiter verteilt, sich der gezeigte optische Verstärker 10 befindet, der dann dazu dient, das optische Signal, bevor es auf mehrere Lichtwellenleiter verteilt wird, zu verstärken. Bei einem solchen System kann, wie in Fig. 1 gezeigt, ein Rückkanal vom Ort der Pumplicht-Quelle zum Endpunkt A, praktisch die Kabelfernseh-Zentrale, eingerichtet werden, über den ein Zusatzsignal, zum Beispiel ein Dienstkanalsignal, übertragen werden kann.

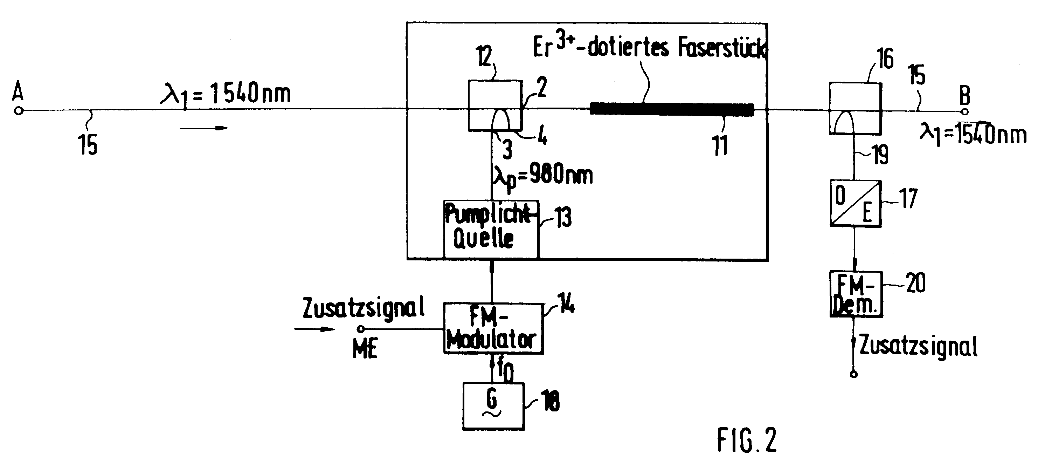

Das vorstehend beschriebene System hat die sogenannte "Counter-Propagating Configuration", bei der der das Pumplicht in das dotierte Faserstück einkoppelnde Koppler, bezogen auf die Übertragungsrichtung des zu verstärkenden optischen Signals, hinter dem verstärkenden Faserstück 11 angeordnet ist. Anhand von Fig. 2 wird nun eine Systemkonfiguration erläutert, die sogenannte "Co-Propagating Configuration", bei der der das Pumplicht in das dotierte Faserstück einkoppelnde Koppler, bezogen auf die Übertragungsrichtung des zu verstärkenden optischen Signals, vor dem verstärkenden Faserstück angeordnet ist. Auch bei einer solchen Anordung läßt sich das aus dem dotierten Faserstück austretende nicht absorbierte Pumplicht dazu verwenden, ein Zusatzsignal zu übertragen.

Bei dem in Fig. 2 gezeigten erfindungsgemäßen System sind die entsprechenden Teile mit den entsprechenden im Zusammenhang mit Fig. 1 eingeführten Bezugszeichen versehen und bedürfen daher keiner eigenen Erläuterung. Der Koppler 12 befindet sich hierbei in Übertragungsrichtung des von A nach B zu übertragenden Signals vor dem Er³⁺-dotierten Faserstück 11. Er koppelt auch hier das eigentliche Übertragungssignal von seinem Anschluß 1 auf seinen Anschluß 2 und das Pumplicht von seinem Anschluß 3 in das Faserstück 11 ein, letzteres über den Anschluß 2 anstatt wie bei Fig. 1 über den Anschluß 1. Bei dieser Anordnung nach Fig. 2 läuft das aus dem dotierten Faserstück 11 austretende Pumplicht in Richtung zum Endpunkt B des Übertragungssystems, also in derselben Richtung wie das erste optische Signal mit der Wellenlänge λ₁ von 1540 nm, wogegen es beim System nach Fig. 1 entgegengesetzt dazu läuft.

Gemäß Fig. 1 läßt sich also die Erfindung anwenden, wenn ein Zusatzsignal vom Ort der Pumplicht-Quelle der Übertragungsstrecke in Richtung zur Quelle des ersten optischen Signals, d.h. dem Endpunkt A, zu übertragen ist, und das System nach Fig. 2 läßt sich dann anwenden, wenn vom Ort der Pumplicht-Quelle des faseroptischen Verstärkers ein Zusatzsignal in Richtung zur Senke des ersten optischen Signals, d.h. zum Endpunkt B, zu übertragen ist.

Durch Kombination der beiden Ausführungsbeispiele ergibt sich ein faseroptischer Verstärker, dessen dotiertes Faserstück von beiden Seiten aus einer Pumplicht-Quelle gespeist wird, mit der Möglichkeit, vom Ort des faseroptischen Verstärkers zwei zusätzliche Signale in verschiedene Richtungen des Übertragungssystems zu übertragen.

Die im Ausführungsbeispiel der vorstehenden Beschreibung genannten Wellenlängen sind nur Beispiele von Wellenlängen, für die die zur Verfügung stehenden Systemkomponenten geeignet sind. Selbstverständlich können auch andere Wellenlängen verwendet werden, wobei die Signalwellenlänge λ₁ immer im Bereich zwischen 1520 und 1570 nm liegt und die Pumpwellenlänge bei 532 nm, 800 nm, 980 nm oder 1480 nm liegen kann.

## Patentansprüche

1. System zum Übertragen eines ersten optischen Signals über einen Lichtwellenleiter (15), das einen faseroptischen Verstärker (10) enthält, der im wesentlichen besteht aus einem verstärkenden Faserstück (11), einer Pumplicht-Quelle (13) und einem wellenlängenselektiven faseroptischen Koppler (12) zum Ankoppeln der Pumplicht-Quelle (13) an das verstärkende Faserstück (11),
**dadurch gekennzeichnet,**
daß zum Übertragen eines zusätzlichen Nachrichtensignals über den Lichtwellenleiter (15)
- bei der Pumplicht-Quelle (13) eine Modulationseinrichtung (14) vorhanden ist, die das von der Pumplicht-Quelle (13) erzeugte Pumplicht mit einem das zusätzliche Nachrichtensignal enthaltenden Modulationssignal moduliert,
- an einer vom Ort der Pumplicht-Quelle (13) entfernten Stelle in den Lichtwellenleiter (15) ein zweiter wellenlängenselektiver faseroptischer Koppler (16) eingefügt ist, der von der Pumplicht-Quelle (13) empfangenes Pumplicht aus dem Lichtwellenleiter (15) auskoppelt und
- mit dem zweiten wellenlängenselektiven faseroptischen Koppler (16) ein optischer Empfänger (17) zum Empfang des im Pumplicht enthaltenen Nachrichtensignals verbunden ist.

2. System nach Anspruch 1, bei dem der faseroptische Koppler (12) in Übertragungsrichtung des ersten optischen Signals hinter dem verstärkenden Faserstück (11) angeordnet ist, so daß das zusätzliche Nachrichtensignal in Gegenrichtung zum ersten optischen Signal über den Lichtwellenleiter übertragen wird.

3. System nach Anspruch 1, bei dem der faseroptische Koppler in Übertragungsrichtung des ersten optischen Signals vor dem verstärkenden Faserstück (11) angeordnet ist, so daß das zusätzliche Nachrichtensignal in gleicher Richtung wie das erste optische Signal über den Lichtwellenleiter (15) übertragen wird.

4. System nach einem der Ansprüche 1 bis 3, dadurch gekennzeichnet, daß die Modulationseinrichtung (14) das zu übertragende zusätzliche Nachrichtensignal auf eine Trägerschwingung aufmoduliert, deren Frequenz f₀ deutlich höher ist als der Kehrwert der Lebensdauer, die die durch das Pumplicht im Faserstück (11) anregbaren Energiezustände des lichtverstärkenden Materials des Faserstücks (11) haben.

## Claims

1. System for transmitting a first optical signal through an optical waveguide (15) containing a fiber-optic amplifier (10) which includes an amplifying length of fiber (11), a pump source (13), and a wavelength-selective fiber-optic coupler (12) for coupling the pump source (13) to the amplifying length of fiber (11),
**characterized in**
that in order to transmit an additional information signal through the optical waveguide (15),
- at the pump source (13) a modulator (14) is provided which modulates the pump light generated by the pump source (13) with a modulating signal containing the additional information signal,
- at a point remote from the location of the pump source (13) the optical waveguide (15) contains a second wavelength-selective fiber-optic coupler (16) which couples pump light received from the pump source (13) out of the optical waveguide (15), and
- an optical receiver (17) is connected to the second wavelength-selective fiber-optic coupler (16) for receiving the information signal contained in the pump light.

2. A system as claimed in claim 1 wherein the fiber-optic coupler (12),as viewed in the direction of transmission of the first optical signal, is located behind tne amplifying length of fiber (11), so that the additional information signal is transmitted through the optical waveguide in a direction opposite to that of the first optical signal.

3. A system as claimed in claim 1 wherein the fiber-optic coupler, as viewed in the direction of transmission of the first optical signal, is located before the amplifying length of fiber (11), so that the additional information signal is transmitted through the optical waveguide (15) in the same direction as the first optical signal.

4. A system as claimed in any one of claims 1 to 3, characterized in that the modulator (14) modulates the additional information signal onto a carrier wave whose frequency f₀ is substantially higher than the reciprocal of the lifetime of those energy states of the light-amplifying material of the length of fiber (11) which are excitable in the length of fiber (11) by the pump light.

## Revendications

1. Système de transmission d'un premier signal optique par l'intermédiaire d'un guide d'ondes lumineuses (15) comprenant un amplificateur (10) à fibre optique, constitué essentiellement d'un tronçon (11) de fibre amplificatrice, d'une source (13) de lumière de pompage et d'un coupleur (12) à fibre optique dont la longueur d'onde peut être choisie, destiné au couplage de la source (13) de lumière de pompage au tronçon (11) de fibre amplificatrice, caractérisé en ce que, pour la transmission d'un signal d'information supplémentaire par l'intermédiaire du guide d'ondes lumineuses (15)
- un dispositif de modulation (14) est présent à la source (13) de lumière de pompage, lequel dispositif module la lumière de pompage produite par la source (13) de lumière de pompage avec un signal de modulation contenant le signal d'information supplémentaire,
- un deuxième coupleur (16) à fibre optique, dont la longueur d'onde peut être choisie, est aiouté à un endroit éloigné de l'emplacement de la source (13) de lumière de pompage, dans le guide d'ondes lumineuses (15), lequel coupleur découple la lumière de pomage reçue de la source (13) de lumière de pompage du guide d'ondes lumineuses (15), et
- un récepteur (17) optique est relié au deuxième coupleur (16) à fibre optique dont la longueur d'onde peut être choisie, pour recevoir le signal d'information contenu dans la lumière de pompage.

2. Système suivant la revendication 1, dans lequel le coupleur (12) à fibre optique est disposé derrière le tronçon (11) de fibre amplificatrice dans le sens de transmission du premier signal optique, de sorte que le signal d'information supplémentaire est transmis dans le sens inverse du premier signal optique, par l'intermédiaire du guide d'ondes lumineuses.

3. Système suivant la revendication 1, dans lequel le coupleur à fibre optique est disposé devant le tronçon (11) de fibre amplificatrice dans le sens de transmission du premier signal optique, de sorte que le signal d'information supplémentaire est transmis dans le même sens que le premier signal optique, par l'intermédiaire du guide d'ondes lumineuses (15).

4. Système suivant l'une des revendications 1 à 3, caractérisé en ce que le dispositif de modulation (14) module le signal d'information supplémentaire à transmettre sur une onde porteuse dont la fréquence f₀ est nettement plus élevée que la réciproque de la durée de vie des états d'énergie du matériau amplificateur de lumière du tronçon (11) de fibre, qui peuvent être excités par la lumière de pompage dans le tronçon (11) de fibre.
